(19) Europäisches Patentamt
European Patent Office
Office européen des brevets

(11) **EP 3 341 690 B1**

(12) **FASCICULE DE BREVET EUROPEEN**

(45) Date de publication et mention
de la délivrance du brevet:
**21.04.2021 Bulletin 2021/16**

(51) Int Cl.:
**G01D 5/20** *(2006.01)*          **G01D 4/02** *(2006.01)*

(21) Numéro de dépôt: **16742285.6**

(86) Numéro de dépôt international:
**PCT/EP2016/067466**

(22) Date de dépôt: **21.07.2016**

(87) Numéro de publication internationale:
**WO 2017/032521 (02.03.2017 Gazette 2017/09)**

(54) **DISPOSITIF DE COMPTAGE DE TOURS D'UNE ROUE AU MOYEN DE BOBINES ET COMPTEUR ÉQUIPÉ DE CE DISPOSITIF DE COMPTAGE**

VORRICHTUNG ZUM ZÄHLEN DER UMDREHUNGEN EINES RADES MITHILFE VON SPULEN UND ZÄHLER MIT EINER SOLCHEN VORRICHTUNG

DEVICE FOR COUNTING THE REVOLUTIONS OF A WHEEL BY MEANS OF COILS AND COUNTER EQUIPPED WITH SUCH A COUNTING DEVICE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **27.08.2015 FR 1557961**

(43) Date de publication de la demande:
**04.07.2018 Bulletin 2018/27**

(73) Titulaire: **Sagemcom Energy & Telecom SAS
92500 Rueil-Malmaison (FR)**

(72) Inventeurs:
• **TEBOULLE, Henri
92500 Rueil Malmaison (FR)**
• **GAUDIN, Jean-Michel
92500 Rueil Malmaison (FR)**
• **MORO, Paolo
92500 Rueil Malmaison (FR)**

(74) Mandataire: **Lavaud, Thomas et al
Cabinet Boettcher
16, rue Médéric
75017 Paris (FR)**

(56) Documents cités:
**EP-A1- 0 408 084      EP-A1- 0 467 753
DE-A1- 4 137 695      US-A1- 2013 197 831**

## Description

Dispositif de comptage de tours d'une roue au moyen d'une bobine et compteur équipé de ce dispositif de comptage

La présente invention concerne le comptage de tours d'un élément tournant, par exemple dans le domaine des compteurs mécaniques tels que ceux utilisés pour la distribution de gaz, d'eau ou d'électricité. L'invention concerne également un tel compteur.

Le document EP 0 467 753 A1 décrit un dispositif de détection de rotation d'une turbine d'un compteur d'eau à l'aide d'une marque métallisée liée en rotation à la turbine et de deux détecteurs de proximité inductifs excités par des impulsions de tension.

Il est connu un compteur de gaz comprenant un élément tournant autour d'un axe par rapport à un bâti de telle manière que la vitesse de rotation de l'élément tournant soit représentative de la quantité de gaz distribué. Le compteur comporte un dispositif de comptage du nombre de tours de l'élément tournant, comprenant un aimant excentré fixé à l'élément tournant et un relais magnétique, de type ampoule REED, sous tension monté fixe par rapport au bâti et relié à un circuit de comptage pour détecter le passage de l'aimant et ainsi compter le nombre de tours. Un inconvénient de ces dispositifs est leur consommation électrique qui interdit un fonctionnement de longue durée sur batterie et leur sensibilité aux fraudes puisque la présence d'un champ magnétique d'où qu'il vienne peut perturber le fonctionnement du dispositif. Il est connu également un dispositif de comptage dans lequel l'aimant est remplacé par une pièce métallique et le relais magnétique par une bobine d'un circuit résonant. Ce type de dispositif n'améliore qu'imparfaitement les dispositifs de comptage à aimant.

Il est connu de frauder en écartant le détecteur (relais magnétique ou bobine) de l'élément tournant de manière que le détecteur ne s'étende plus en regard de l'élément tournant afin de rendre le détecteur inopérant. Dans ces compteurs, l'élément tournant et le dispositif de comptage sont enfermés dans un boîtier externe auquel le dispositif de comptage est fixé par une vis accessible depuis l'extérieur du boîtier. Lors d'une tentative de fraude, la vis est ôtée de sorte que le dispositif de comptage soit décalé par rapport à l'élément tournant, empêchant le dispositif de comptage de détecter la rotation de l'élément tournant.

Il est connu de détecter le déplacement du dispositif de comptage et, donc, la tentative de fraude, au moyen d'un interrupteur actionné lors d'un retrait du boîtier. La fiabilité de la détection suppose cependant des tolérances de fabrication relativement fines. Il est connu par ailleurs de recourir à des moyens magnétiques ou inductifs sans que ces solutions n'aient donné pleinement satisfaction.

Un but de l'invention est d'améliorer les dispositifs de comptage existants.

A cet effet, on prévoit, selon l'invention, un dispositif de comptage de tours d'un élément tournant autour d'un axe par rapport à un bâti, comprenant une roue en matériau non métallique liée en rotation à l'élément tournant et pourvue localement d'au moins une masse métallique excentrée laissant une partie de la roue découverte, au moins deux bobines qui sont écartées l'une de l'autre et montées fixes par rapport au bâti en regard d'une portion de trajectoire de la masse métallique de telle manière qu'au moins toutes les bobines sauf une soient toujours sensibles à ladite masse métallique, la masse métallique étant agencée pour limiter un couplage entre les bobines, qui appartiennent chacune à un circuit inductif relié électriquement à une unité de comptage agencée pour : émettre périodiquement et sensiblement simultanément dans chaque circuit inductif une impulsion de tension selon une fréquence d'émission supérieure ou égale à quatre fois la fréquence maximale prédéterminée de rotation de la roue, détecter un signal oscillant de tension en sortie de chaque circuit inductif et le comparer à une tension de référence pour compter dans le signal un nombre d'oscillations supérieures à la tension de référence, et incrémenter d'un un compteur de tours à chaque fois que, pour l'un des circuits inductifs, ce nombre d'oscillations supérieures à la tension de référence devient compris dans une première plage prédéterminée de valeurs alors que, pour chacun des autres circuits inductifs, ce nombre devient compris dans une deuxième plage prédéterminée de valeurs ne comprenant aucun recouvrement avec la première plage.

Lorsque la pièce métallique est proche de la bobine, la bobine est soumise à l'influence de la masse métallique de sorte que les propriétés d'amortissement du circuit inductif conduisent à une diminution du niveau en tension du signal oscillatoire amorti généré par la bobine. Ainsi, l'impulsion de tension ne sera pas amortie de la même manière en présence ou en l'absence de la masse métallique. Le comptage est basé sur la détection du nombre d'oscillations dont l'amplitude maximale est supérieure à la tension de référence. Ce mode de comptage est fiable et peu sensible aux tentatives de fraude. En outre, le dispositif de comptage n'est pas alimenté en permanence mais seulement lors de l'injection de l'impulsion de tension dans le circuit inductif, la détection du signal oscillant, la comparaison et l'incrémentation. Le dispositif de comptage est donc très économe et peut être alimenté par une batterie pendant une relativement longue durée. On note que la masse métallique est toujours détectée par au moins une des bobines. Ainsi, en cas de déplacement des bobines par rapport à la roue, aucune des bobines ne détecte la masse métallique permettant de révéler une tentative de fraude. L'utilisation de deux circuits inductifs permet d'augmenter la fiabilité du comptage (compte des demi-tours et levée d'incertitude lorsque la masse métallique se trouve au voisinage d'une des bobines sans être en regard de celle-ci) et de diminuer la sensibilité à la fraude puisque le comptage suppose que seule une des bobines puisse ne pas être simultanément soumise à l'influence de la masse métallique.

De préférence, l'unité de comptage est agencée pour réaliser une opération d'ajustement de la tension d'impulsion pour chaque circuit inductif de telle manière que le nombre d'oscillations du signal oscillant supérieures à la tension de référence inférieur au seuil prédéterminé soit compris dans la deuxième plage prédéterminée en présence de la masse métallique en regard de la bobine et compris dans la première plage prédéterminée en l'absence de la masse métallique.

Les caractéristiques des circuits inductifs ont des propriétés (fréquence de résonance, niveau en tension du signal oscillant) qui peuvent évoluer avec le temps ou en fonction de la température.

Selon un mode de réalisation particulier, la roue est pourvue d'une denture périphérique et un premier pignon denté est solidaire de l'élément tournant pour transmettre le mouvement de l'élément tournant vers la roue.

Ainsi, la roue n'est pas fixée directement sur l'élément tournant, ce qui laisse plus de latitude pour son positionnement et pour celui du circuit inductif.

Avantageusement alors, un deuxième pignon engrène avec la roue et le premier pignon pour transmettre le mouvement de pivotement du premier pignon à la roue et les pignons et la roue ont des diamètres tels que la roue ait une fréquence de rotation inférieure à une fréquence de rotation du premier pignon.

En réduisant la fréquence de rotation de la roue, on peut limiter la fréquence d'émission d'impulsions de tension et donc limiter la consommation du dispositif de comptage.

De préférence, l'unité de comptage est agencée pour signaler une fraude si l'une quelconque des conditions suivantes est vérifiée :

- la somme des nombres d'oscillations supérieures à la tension de référence est supérieure ou égale à un deuxième seuil prédéterminé pour une même opération de comptage,
- le nombre d'oscillations supérieures à la tension de référence est inférieur à un troisième seuil prédéterminé ou supérieur à un quatrième seuil prédéterminé pour au moins une des bobines,
- le nombre d'oscillations supérieures à la tension de référence est supérieur à un cinquième seuil prédéterminé pour au moins deux bobines parmi les N bobines pour une même opération de comptage.

Avantageusement, si le nombre d'oscillations supérieures à la tension de référence est supérieur au cinquième seuil prédéterminé pour toutes les bobines pour une même opération de comptage, l'unité de comptage est agencée pour émettre un signal particulier prédéterminé pour signaler une fraude de type arrachement.

L'invention a également pour objet un compteur équipé du dispositif de comptage du type précité.

D'autres caractéristiques et avantages de l'invention ressortiront à la lecture de la description qui suit de modes de réalisation particuliers non limitatifs de l'invention.

Il sera fait référence aux dessins annexés, parmi lesquels :

- la figure 1 est une vue schématique en perspective d'un compteur selon un premier mode de réalisation de l'invention ;
- la figure 2 est une vue schématique d'un dispositif de comptage selon l'invention pour une position de l'élément tournant, avec l'allure du signal oscillant produit par chaque circuit inductif ;
- les figures 3 à 5 sont des vues analogues à la figure 2 montrant le dispositif de comptage, pour d'autres positions de l'élément tournant ;
- la figure 6 est un schéma du circuit du dispositif de comptage ;
- la figure 7 est un graphique illustrant le fonctionnement du dispositif de comptage ;
- les figures 8a, 8b, 8c montrent l'allure du signal oscillant en l'absence de la masse métallique, en présence de celle-ci, et en présence d'une fraude ;
- la figure 9 est une vue schématique, de dessus, de la roue d'un dispositif de comptage selon un deuxième mode de réalisation de l'invention ;
- la figure 10 est une vue analogue à la figure 9 pour un dispositif de comptage selon un troisième mode de réalisation de l'invention ;
- la figure 11 est une vue analogue à la figure 9 pour un dispositif de comptage selon un quatrième mode de réalisation de l'invention.

L'invention est ici décrite en application à un compteur de gaz destiné à être installé dans un bâtiment privé pour raccorder une installation de distribution du gaz dans le bâtiment à un réseau externe de distribution du gaz. Il va de soi que l'invention n'est pas limitée à cette application et concerne aussi, notamment, les compteurs d'eau, d'électricité...

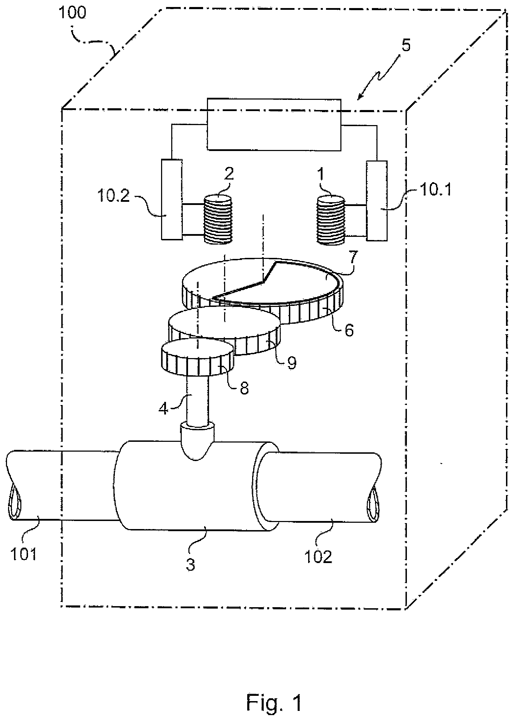

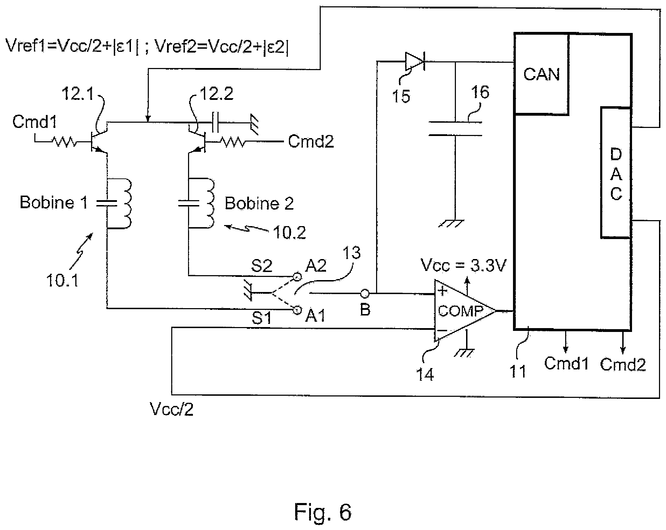

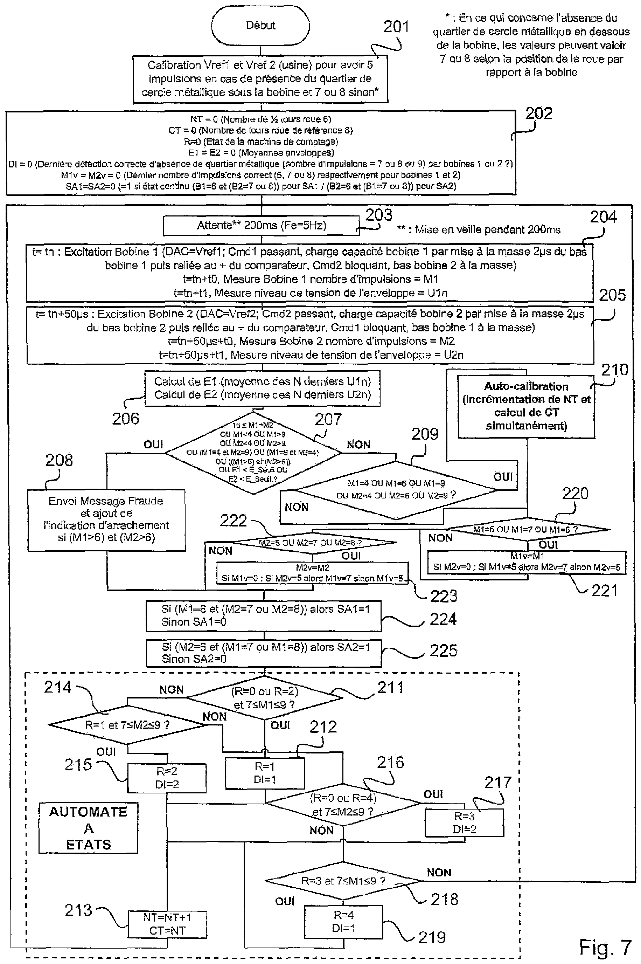

En référence aux figures 1 à 8c, le compteur comprend un bâti formant boîtier 100 dans lequel arrive un conduit 101 d'amenée de gaz, relié au réseau externe de distribution, et dont part un conduit 102 de l'installation de distribution de gaz. Les deux conduits sont reliés l'un à l'autre par un raccord 3 dans lequel s'étend une partie d'un élément tournant 4 entrainée en rotation par le gaz circulant dans le raccord depuis le conduit 101 vers le conduit 102 de telle manière que la rotation de l'élément tournant 4 soit représentative de la quantité de gaz passant dans le raccord 3. Cet agencement est connu en lui-même et ne sera pas plus décrit ici.

Le compteur comprend un dispositif, généralement désigné en 5, de comptage des tours de l'élément tournant 4. Le dispositif de comptage 5 comprend une roue 6 en matériau non métallique liée en rotation à l'élément tournant 4 et pourvue localement d'au moins une masse métallique excentrée 7 ayant une forme de secteur annulaire jouxtant la périphérie de la roue 6 et laissant découverte une partie 6' de la roue 6. La masse métallique 7 occupe ici un peu plus de la moitié de la roue 6. La roue 6 est pourvue d'une denture périphérique et un premier pignon denté 8 est solidaire de l'élément tournant 4 pour transmettre le mouvement de l'élément tournant 4 vers la roue 6 via un deuxième pignon denté 9 engrenant avec la roue 6 et le premier pignon 8. Les pignons 8, 9 et la roue 6 ont des diamètres tels que la roue 6 ait une fréquence de rotation inférieure à une fréquence de rotation du premier pignon 8. La roue 6 tourne ici deux fois moins vite que le premier pignon 8.

Le dispositif de comptage 5 comprend également deux circuits inductifs résonants, généralement désignés en 10.1, 10.2, reliés à une unité de comptage comportant ici un microcontrôleur 11.

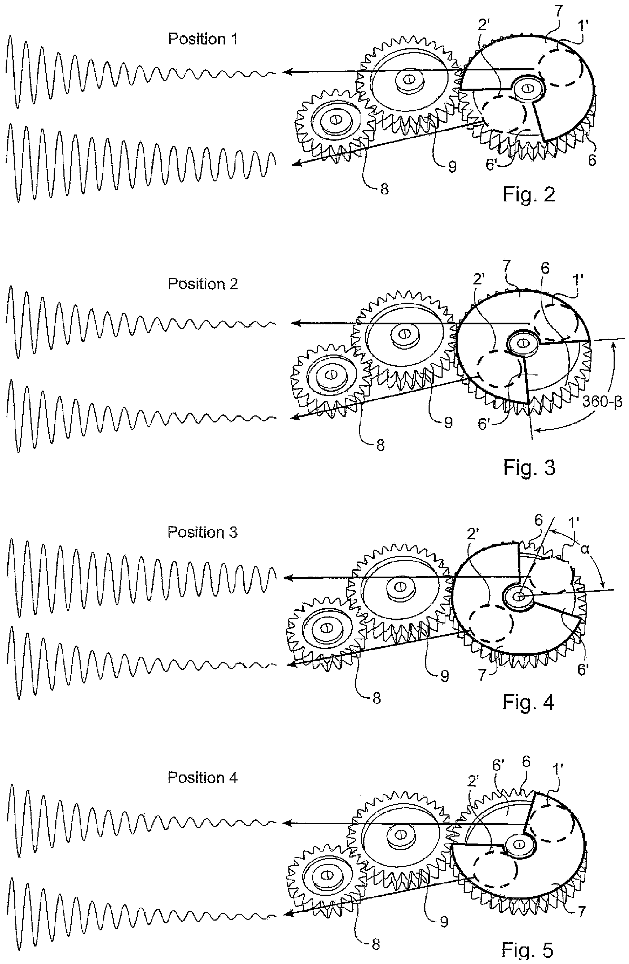

Chaque circuit inductif 10.1, 10.2 comprend une bobine 1, 2 montée fixe par rapport au boîtier 100 en regard chacune d'une portion de trajectoire de la masse métallique 7 (seules les projections 1', 2' des bobines 1, 2 sur la roue 6 sont représentées sur les figures 2 à 5). Les bobines 1, 2 sont écartées l'une de l'autre de manière que chaque bobine 1, 2 soit sensible successivement à la masse métallique 7 mais qu'au moins une des deux bobines soit toujours sensible à ladite masse métallique 7, c'est-à-dire qu'à un instant t, seule une des bobines 1, 2 peut ne pas être soumise à l'influence de la masse métallique 7, l'autre des bobines 1, 2 l'est forcément. En outre, la masse métallique 7 s'étend sur un angle $\beta$ (en degré) égal à :

$\beta = 360/N + \alpha$ avec N le nombre de bobines et $\alpha$ l'angle en degré d'un secteur angulaire de la roue 6 dans lequel s'inscrit une projection d'une des bobines sur la roue. L'angle $\beta$ vaut donc ici 180 + $\alpha$. On notera que cette valeur d'angle permet d'assurer qu'au moins une des deux bobines soit toujours sensible à ladite masse métallique 7 en conservant une partie découverte de la roue 6 suffisante pour permettre un comptage fiable.

Chaque bobine 1, 2 a une extrémité haute reliée au convertisseur numérique analogique DAC du microcontrôleur 11 par des commutateurs 12.1, 12.2 et une extrémité basse reliée à une borne A1, A2 d'un commutateur 13 ayant une troisième borne reliée à la masse et une quatrième borne B reliée à l'entrée positive d'un comparateur 14. Le comparateur 14 a une entrée négative reliée au convertisseur numérique analogique du microcontrôleur 11 et une sortie reliée à une entrée du microcontrôleur 11, intégrant un mécanisme permettant de compter les fronts montants (on pourrait également compter les fronts descendants au lieu des fronts montants) en sortie du comparateur dont la forme d'onde est un signal impulsionnel rectangulaire par exemple à 3,3 V.

La borne B du commutateur 13 est reliée via une diode 15 à un convertisseur analogique numérique CAN du microcontrôleur 11. Un condensateur 16 est monté entre la cathode de la diode 15 et la masse pour former un détecteur d'enveloppe du signal arrivant par la borne B du commutateur 13.

Le microcontrôleur 11 pilote les transistors 12.1, 12.2 entre leurs états passant et bloquant au moyen de signaux de commande Cmd1, Cmd2.

L'unité de comptage est agencée pour réaliser une opération de comptage en mettant en œuvre les étapes suivantes :

- émettre périodiquement et quasi simultanément dans chaque circuit inductif 10.1, 10.2 une impulsion de tension Vref1, Vref2, par l'intermédiaire d'une autre sortie de conversion numérique analogique du microcontrôleur 11, selon une fréquence d'émission supérieure à une fréquence maximale prédéterminée de rotation de la roue 6, et égale à au moins 4 fois ladite fréquence maximale de manière à pouvoir compter les tours de la roue 6 sans erreur à l'aide desdits circuits inductifs,
- détecter un signal oscillant de tension S1, S2 en sortie du circuit inductif 10.1, 10.2 et le comparer à une tension de référence Vcc/2,
- incrémenter d'un un nombre de tours CT mémorisé après que les circuits inductifs 10.1, 10.2 ont livré successivement un signal oscillant ayant un nombre M1, M2 d'oscillations supérieures à la tension de référence inférieur au seuil prédéterminé.

On comprend que le circuit inductif 10.1, 10.2 amortit l'impulsion de tension et fournit un signal oscillant. Selon que la masse métallique 7 est présente ou non sous la bobine, l'amortissement procuré par le circuit inductif 10.1, 10.2 est modifié (voir les figures 2 à 5).

La tension respective des impulsions Vref1 et Vref2 est ajustée au préalable (en usine par exemple), est légèrement supérieure à la tension de référence Vcc/2 et est ici égale respectivement à Vcc/2+|ε1| et Vcc/2+|ε2|. La valeur de cette tension permet de régler le nombre M1, M2 du signal oscillant en présence et en l'absence de la masse métallique 7.

Le fonctionnement de l'invention va maintenant être décrit plus en détail.

Il est préférable de réaliser une étape de calibration (201) en usine. Pour chaque circuit inductif 10.1, 10.2, la tension Vref1, Vref2 est calibrée de telle manière que :

- en présence de métal, le nombre M1, M2 d'oscillations supérieures à la tension de référence soit égal à 5 ;
- en l'absence de la masse métallique 7 sous la bobine 1, 2, le nombre M1, M2 d'oscillations supérieures à la tension de référence soit égal à 7 ou 8.

Ceci revient à définir un seuil égal à 6, la différence de 2 entre les deux valeurs de nombre permettant de nettement discriminer l'absence et la présence de la masse métallique.

Il est ensuite procédé à une initialisation (étape 202) des variables de fonctionnement du dispositif de comptage :

- NT est le nombre de demi-tours de la roue 6 (soit, en théorie, le nombre de tours de l'élément tournant 4) ;
- CT est le nombre de tour de l'élément tournant 4 ;
- R est une variable d'état de l'unité de comptage ;

- DI indique quelle est la dernière bobine qui a détecté 7, 8 ou 9 impulsions (valeur 1 si bobine 1 et valeur 2 si bobine 2)
- M1v et M2v indiquent la dernière valeur correcte (5, 7 ou 8) mesurée pour chaque bobine.
- SA1(respectivement SA2) est un sémaphore égal à 1 tant que l'on est dans l'état où l'on mesure 6 pour la bobine 1 et 7 ou 8 pour la bobine 2 (respectivement 6 pour la bobine 2 et 7 ou 8 pour la bobine 1 pour SA2), et égal à 0 sinon.
- U1n et U2n représentent le niveau de tension de l'enveloppe,
- E1 et E2 représentent la valeur moyenne des enveloppes des signaux oscillants S1, S2 (moyenne des N derniers U1n, U2n).

Une fois le compteur installé, et en mode de fonctionnement normal, le dispositif de comptage est mis en veille pendant 200 ms (étape 203) pour économiser l'énergie. Ceci correspond à une fréquence d'échantillonnage de 5Hz, sachant que dans le mode de réalisation décrit, la fréquence de rotation maximale de la roue 6 est de 0,5Hz. On pourrait également travailler à une fréquence d'échantillonnage différente, par exemple de 7Hz, ce qui correspondrait alors à une période d'échantillonnage de 143ms au lieu de 200ms.

Les transistors 12.1, 12.2 sont alors à l'état bloquant et le commutateur 13 maintient les deux bobines 1, 2 à la masse.

A l'instant t=tn, la bobine 1 est excitée par l'injection de l'impulsion de tension. A cette fin, le transistor 12.1 est amené dans son état passant et, après $2\mu s$ (la capacité de la bobine 1 est alors chargée), le commutateur 13 est commandé pour relier la bobine 1 à l'entrée positive du comparateur 14 et lui fournir le signal S1. A t=tn+t0, le nombre M1 est déterminé et, à t=tn+t1, le niveau de tension U1n est déterminé (étape 204).

A l'instant $t=tn+50\mu s$, la bobine 2 est excitée par l'injection de l'impulsion de tension. A cette fin, le transistor 12.2 est amené dans son état passant et, après $2\mu s$ (la capacité de la bobine 2 est alors chargée), le commutateur 13 est commandé pour relier la bobine 2 à l'entrée positive du comparateur 14 et lui fournir le signal S2. A $t=tn+50\mu s+t0$, le nombre M2 est déterminé et, à $t=tn+50\mu s+t1$, le niveau de tension U2n est déterminé (étape 205). Typiquement, $t0=10\mu s$ et $t1=20\mu s$.

Les valeurs moyennes des enveloppes E1, E2 sont ensuite calculées (étape 206).

On cherche ensuite à déterminer la véracité d'au moins l'une des conditions suivantes :

- $M1+M2 \geq 16$ ;
- $M1 < 4$ ;
- $M1 > 9$ ;
- $M2 < 4$ ;
- $M2 > 9$ ;
- $M1=4$ et $M2=9$ ;
- $M1=9$ et $M2=4$ ;
- $M1 > 6$ et $M2 > 6$ ;
- E1 est inférieure à un seuil prédéterminé E seuil ;
- E2 est inférieure à un seuil prédéterminé E seuil.

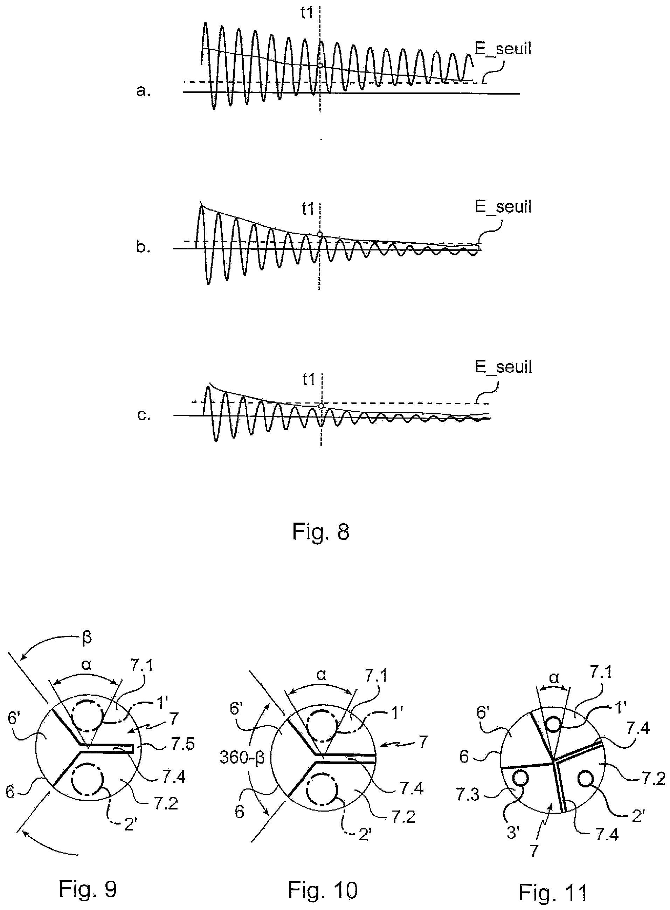

Si l'une de ces conditions est vraie, une alerte à la fraude est émise (étape 208), avec indication d'arrachement dans le cas où $M1 > 6$ et $M2 > 6$. En particulier, concernant les deux dernières conditions, on peut voir, par comparaison des figure 8a, 8b, 8c, que :

- la valeur moyenne de l'enveloppe du signal en l'absence de la masse métallique 7 et en l'absence d'une masse métallique externe (figure 8a) est supérieure à la valeur moyenne de l'enveloppe du signal en présence de la masse métallique 7 et en l'absence d'une masse métallique externe (figure 8b) ;
- la valeur moyenne de l'enveloppe du signal en présence de la masse métallique 7 et en l'absence d'une masse métallique externe (figure 8b) est supérieure à la valeur moyenne de l'enveloppe du signal en présence d'une masse métallique externe (figure 8c).

Si aucune de ces conditions n'est vraie, on cherche à déterminer la véracité d'au moins l'une des conditions suivantes :

- $M1=4$ ;
- $M1=6$ ;
- $M1=9$ ;
- $M2=4$ ;
- $M2=6$ ;
- $M2=9$.

Ces conditions correspondent à une modification des propriétés d'amortissement des circuits inductifs 10.1, 10.2. Si l'une de ces conditions est vraie, il est nécessaire de procéder à une étape d'auto-calibration 210. Cette auto-calibration pourrait également être effectuée périodiquement, par exemple tous les 7 jours. L'auto-calibration est réalisée comme la phase de calibration en modifiant la valeur $\varepsilon1$, $\varepsilon2$.

Si aucune de ces conditions n'est vraie, et également à la fin de l'auto-calibration, on cherche à déterminer la véracité de l'une des conditions suivantes (étape 220) :

- $M1=5$ ;
- $M1=7$ ;
- $M1=8$.

Si au moins l'une de ces conditions est vraie, la valeur M1 est attribuée à M1v, et si M2v=0, alors si M1v=5 alors M2v=7 sinon M2v=5 (étape 221), et on passe à l'étape 222. Sinon, on passe à l'étape 222.

Puis, on cherche à déterminer la véracité de l'une des conditions suivantes (étape 222) :

- M2=5 ;
- M2=7 ;
- M2=8.

Si au moins l'une de ces conditions est vraie, la valeur M2 est attribuée à M2v, et si M1v=0, alors si M2v=5 alors M1v=7 sinon M1v=5 (étape 223), et on passe à l'étape 224. Sinon, on passe à l'étape 224.

Ensuite, on cherche à déterminer la véracité des conditions suivantes (étape 224) :

- M1=6 ;
- M2=7 ou M2=8.

Si ces conditions sont vraies, la valeur 1 est attribuée à SA1. Sinon, la valeur 0 est attribuée à SA1.

Ensuite, on cherche à déterminer la véracité des conditions suivantes (étape 225) :

- M2=6 ;
- M1=7 ou M1=8.

Si ces conditions sont vraies, la valeur 1 est attribuée à SA2. Sinon, la valeur 0 est attribuée à SA2.

Ensuite, on cherche à déterminer la véracité des conditions suivantes (étape 211) :

- R=0 ou R=2 ;
- $7 \leq M1 \leq 9$.

Si ces conditions sont vraies, la valeur 1 est attribuée à R et DI (étape 212) puis la variable NT prend la valeur NT+1 et la variable CT prend la valeur NT lors d'une étape d'incrémentation 213. On reprend ensuite le cycle à la mise en veille du dispositif de comptage (203).

Si au moins l'une de ces conditions n'est pas vraie, on cherche à déterminer la véracité des conditions suivantes (étape 214) :

- R=1 ;
- $7 \leq M2 \leq 9$.

Si ces conditions sont vraies, la valeur 2 est attribuée à R et à DI (étape 215) puis la variable NT prend la valeur NT+1 et la variable CT prend la valeur NT lors de l'étape d'incrémentation 213. On reprend ensuite le cycle à la mise en veille du dispositif de comptage (203).

Si au moins l'une de ces conditions n'est pas vraie, on cherche à déterminer la véracité des conditions suivantes (étape 216) :

- R=0 ou R=4 ;
- $7 \leq M2 \leq 9$.

Si ces conditions sont vraies, la valeur 3 est attribuée à R et la valeur 2 est attribuée à DI (étape 217) puis la variable NT prend la valeur NT+1 et la variable CT prend la valeur NT lors de l'étape d'incrémentation 213. On reprend ensuite le cycle à la mise en veille du dispositif de comptage (203).

Si au moins l'une de ces conditions n'est pas vraie, on cherche à déterminer la véracité des conditions suivantes (étape 218) :

- R=3 ;
- $7 \leq M1 \leq 9$.

Si ces conditions sont vraies, la valeur 4 est attribuée à R et la valeur 1 est attribuée à DI (étape 219) puis la variable NT prend la valeur NT+1 et la variable CT prend la valeur NT lors de l'étape d'incrémentation 213. On reprend ensuite le cycle à la mise en veille du dispositif de comptage (203).

Si au moins l'une de ces conditions n'est pas vraie, on reprend le cycle à la mise en veille du dispositif de comptage (203).

La masse métallique 7 peut avoir une autre forme que celle précédemment décrite.

Ainsi, en variante, pour un nombre N de bobines, la masse métallique 7 peut comprendre N parties qui ont des surfaces sensiblement identiques et qui sont séparées deux-à-deux par une fente s'étendant sur une majeure partie d'un rayon de la roue, la fente ayant une largeur telle qu'elle a un effet négligeable sur le signal oscillant.

En référence à la figure 9 et selon le deuxième mode de réalisation, la masse métallique 7 comprend deux parties 7.1, 7.2 qui ont des surfaces sensiblement identiques et qui sont partiellement séparées par une fente 7.4 s'étendant sur une majeure partie d'un rayon de la roue 6. La fente 7.4 ne s'étend pas ici sur tout le rayon et laisse subsister une portion métallique 7.5 s'étendant au voisinage de la périphérie de la roue 6. La fente 7.4 laisse découverte une portion de la roue 6 très inférieure à la partie découverte 6' et ne gêne pas la détection.

En référence à la figure 10 et selon le troisième mode de réalisation, la masse métallique 7 comprend deux parties 7.1, 7.2 qui ont des surfaces sensiblement identiques et qui sont totalement séparées par une fente 7.4 s'étendant sur tout un rayon de la roue 6.

En référence à la figure 11 et selon le quatrième mode de réalisation, la masse métallique 7 comprend trois parties 7.1, 7.2, 7.3 qui ont des surfaces sensiblement identiques et qui sont totalement séparées deux-à-deux par une fente 7.4 s'étendant sur tout un rayon de la roue 6.

Le dispositif de comptage 5 comprend également trois circuits inductifs résonants reliés comme précédemment à une unité de comptage.

Chaque circuit inductif comprend une bobine dont seule la projection 1', 2', 3' est représentée sur la figure 11. Les bobines sont montées comme précédemment en étant ici toutefois positionnées à 120° les unes des autres de manière que chaque bobine soit sensible successivement à la masse métallique 7 mais qu'au moins deux des bobines soient toujours sensibles à ladite masse métallique 7, c'est-à-dire qu'à un instant t, seule une des bobines peut ne pas être soumise à l'influence de la masse métallique 7, les deux autres bobines le sont forcément. En outre, la masse métallique 7 s'étend sur un angle β (en degré) égal à :

β = 360/N + α avec N le nombre de bobines et α l'angle en degré d'un secteur angulaire de la roue 6 dans lequel s'inscrit une projection d'une des bobines sur la roue. L'angle β vaut ici 120 + α. On notera que cette valeur d'angle permet d'assurer qu'au moins deux des trois bobines soient toujours sensibles à ladite masse métallique 7 en conservant une partie découverte de la roue 6 suffisante pour permettre un comptage fiable. La surface de la partie 6' doit pouvoir contenir entièrement la projection d'une bobine sur la roue 6 de telle manière que les bobines ne soient pas sensibles à la masse métallique 7 lorsqu'elles sont en regard de la partie 6'.

Bien entendu, l'invention n'est pas limitée aux modes de réalisation décrits mais englobe toute variante entrant dans le champ de l'invention telle que définie par les revendications.

En particulier, l'invention est applicable à tout compteur mécanique.

Le dispositif de comptage peut ne comporter qu'une bobine.

Le dispositif de comptage peut être dépourvu de dispositif de détection de fraude.


## Revendications

1. Dispositif de comptage de tours d'un élément tournant autour d'un axe par rapport à un bâti, comprenant une roue (6) en matériau non métallique liée en rotation à l'élément tournant et pourvue localement d'au moins une masse métallique (7) excentrée laissant une partie de la roue découverte, au moins deux bobines (1, 2) qui sont écartées l'une de l'autre et montées fixes par rapport au bâti en regard d'une portion de trajectoire de la masse métallique de telle manière qu'au moins toutes les bobines sauf une soient toujours sensibles à ladite masse métallique, la masse métallique (7) étant agencée pour limiter un couplage entre les bobines, qui appartiennent chacune à un circuit inductif (10.1, 10.2) relié électriquement à une unité de comptage agencée pour : émettre périodiquement et sensiblement simultanément dans chaque circuit inductif une impulsion de tension (Vref1, Vref2) selon une fréquence d'émission supérieure ou égale à quatre fois la fréquence maximale prédéterminée de rotation de la roue, détecter un signal oscillant de tension en sortie de chaque circuit inductif et le comparer à une tension de référence (Vcc/2) pour compter dans le signal un nombre d'oscillations supérieures à la tension de référence, et incrémenter d'un un compteur de tours à chaque fois que, pour l'un des circuits inductifs, ce nombre d'oscillations supérieures à la tension de référence devient compris dans une première plage prédéterminée de valeurs alors que, pour chacun des autres circuits inductifs, ce nombre devient compris dans une deuxième plage prédéterminée de valeurs ne comprenant aucun recouvrement avec la première plage.

2. Dispositif selon la revendication 1, dans lequel la masse métallique (7) s'étend sur un angle β (en degré) égal à :
β = 360/N + α avec N le nombre de bobines et α l'angle d'un secteur angulaire de la roue dans lequel s'inscrit une projection de la bobine sur la roue.

3. Dispositif selon la revendication 1 ou la revendication 2, dans lequel la masse métallique (7) a une forme en portion d'anneau jouxtant la périphérie de la roue (6).

4. Dispositif selon la revendication 1, dans lequel, pour un nombre N de bobines, la masse métallique comprend N parties qui ont des surfaces sensiblement identiques et qui sont séparées deux-à-deux par une fente (7.4) s'étendant sur une majeure partie d'un rayon de la roue, la fente ayant une largeur telle qu'elle a un effet négligeable sur le signal oscillant.

5. Dispositif selon la revendication 1, dans lequel l'unité de comptage est agencée pour réaliser une opération d'ajustement de la tension d'impulsion pour chaque circuit inductif de telle manière que le nombre d'oscillations du signal oscillant supérieures à la tension de référence inférieur au seuil prédéterminé soit compris dans la deuxième plage prédéterminée de valeurs en présence de la masse métallique (7) en regard de la bobine et compris dans la première plage prédéterminée de valeurs en l'absence de la masse métallique.

6. Dispositif selon la revendication 5, dans lequel l'écart qui sépare la première plage prédéterminée de valeurs et la deuxième plage prédéterminée de valeurs est égale à deux.

7. Dispositif selon l'une quelconque des revendications précédentes, dans lequel l'unité de comptage est agencée pour signaler une fraude si l'une quelconque des conditions suivantes est vérifiée :

- la somme des nombres d'oscillations supérieures à la tension de référence est supérieure ou égale à un deuxième seuil prédéterminé pour une même opération de comptage,
- le nombre d'oscillations supérieures à la tension de référence est inférieur à un troisième seuil prédéterminé ou supérieur à un quatrième seuil prédéterminé pour au moins une des bobines,
- le nombre d'oscillations supérieures à la tension de référence est supérieur à un cinquième seuil prédéterminé pour au moins deux bobines parmi les N bobines pour une même opération de comptage.

8. Dispositif selon l'une quelconque des revendications précédentes, dans lequel le comptage du nombre d'oscillations supérieures à la tension de référence (Vcc/2) débute après un temps prédéterminé pour s'affranchir d'effets transitoires.

9. Dispositif selon l'une quelconque des revendications précédentes, dans lequel la roue (6) est pourvue d'une denture périphérique et un premier pignon denté (8) est solidaire de l'élément tournant pour transmettre le mouvement de l'élément tournant vers la roue.

10. Dispositif selon la revendication 9, dans lequel un deuxième pignon (9) engrène avec la roue et le premier pignon pour transmettre le mouvement de pivotement du premier pignon à la roue.

11. Dispositif selon la revendication 10, dans lequel les pignons et la roue ont des diamètres tels que la roue ait une fréquence de rotation inférieure à une fréquence de rotation du premier pignon.

12. Dispositif selon l'une des revendications précédentes, comprenant une unité de détection de fraude agencée pour déterminer une forme d'enveloppe du signal oscillant de tension et rechercher une altération de l'enveloppe.

13. Dispositif selon la revendication 7, dans lequel, si le nombre d'oscillations supérieures à la tension de référence est supérieur au cinquième seuil prédéterminé pour toutes les bobines (1, 2) pour une même opération de comptage, l'unité de comptage est agencée pour émettre un signal particulier prédéterminé pour signaler une fraude de type arrachement.

14. Compteur mécanique comportant un boîtier renfermant un élément tournant et un dispositif selon l'une quelconque des revendications précédentes.

15. Compteur selon la revendication 14, dans lequel la roue est pourvue d'une denture périphérique et un premier pignon denté est solidaire de l'élément tournant pour transmettre le mouvement de l'élément tournant vers la roue, la roue étant disposée vers une face arrière du boîtier.

**Patentansprüche**

1. Vorrichtung zum Zählen der Umdrehungen eines Drehelements, das sich relativ zu einem Gestell um eine Achse dreht, umfassend ein Rad (6) aus einem nichtmetallischen Material, das drehfest mit dem Drehelement verbunden und lokal mit mindestens einer exzentrisch angeordneten metallischen Masse (7) versehen ist, die einen Teil des Rades unbedeckt lässt, mindestes zwei Spulen (1, 2), die zueinander beabstandet und ortsfest in Bezug auf das Gestell gegenüber einem Bahnabschnitt der metallischen Masse derart montiert sind, dass zumindest alle Spulen bis auf eine immer empfindlich gegenüber der genannten metallischen Masse sind, wobei die metallische Masse (7) ausgebildet ist, um eine Kopplung zwischen den Spulen zu begrenzen, die jeweils zu einer induktiven Schaltung (10.1, 10.2) gehören, die elektrisch mit einer Zähleinheit verbunden ist, die ausgebildet ist, um: periodisch und im Wesentlichen gleichzeitig in jeder induktiven Schaltung einen Spannungsimpuls (Vref1, Vref2) gemäß einer Sendefrequenz zu senden, die größer oder gleich dem Vierfachen der vorbestimmten maximalen Drehfrequenz des Rades ist, ein oszillierendes Spannungssignal am Ausgang jeder induktiven Schaltung zu erfassen und es mit einer Referenzspannung (Vcc/2) zu vergleichen, um in dem Signal eine Anzahl von Schwingungen zu zählen, die größer als die Referenzspannung sind, und einen Umdrehungszähler jedes Mal um Eins zu erhöhen, wenn für eine der induktiven Schaltungen diese Anzahl von Schwingungen, die größer als die Referenzspannung sind, in einem vorbestimmten ersten Bereich von Werten liegen wird, während für jede der anderen induktiven Schaltungen diese Anzahl in einem vorbestimmten zweiten Bereich von Werten liegen wird, der keine Überlappung mit dem ersten Bereich hat.

2. Vorrichtung nach Anspruch 1, bei der sich die metallische Masse (7) über einen Winkel β (in Grad) erstreckt, der gleich ist:
β = 360/N + α, wobei N die Anzahl an Spulen und α der Winkel eines Winkelsektors des Rades ist, in den sich eine Projektion der Spule auf das Rad einschreibt.

3. Vorrichtung nach Anspruch 1 oder Anspruch 2, bei der die metallische Masse (7) eine Form eines Ringabschnitts hat, der an den Umfang des Rades (6) angrenzt.

**4.** Vorrichtung nach Anspruch 1, bei der für eine Anzahl N von Spulen die metallische Masse N Teile umfasst, die Oberflächen haben, die im Wesentlichen identisch und paarweise durch einen Schlitz (7.4) getrennt sind, der sich über einen Großteil eines Radius des Rades erstreckt, wobei der Schlitz eine solche Breite hat, dass er einen vernachlässigbaren Effekt auf das oszillierende Signal hat.

**5.** Vorrichtung nach Anspruch 1, bei der die Zähleinheit ausgebildet ist, um einen Anpassungsvorgang zum Anpassen der Impulsspannung für jede induktive Schaltung derart zu realisieren, dass die Anzahl von Schwingungen des oszillierenden Signals, die größer als die Referenzspannung sind, die kleiner als der vorbestimmte Schwellenwert ist, bei Vorhandensein der metallischen Masse (7) gegenüber der Spule in dem vorbestimmten zweiten Bereich von Werten liegt und bei Nichtvorhandensein der metallischen Masse in dem vorbestimmten ersten Bereich von Werten liegt.

**6.** Vorrichtung nach Anspruch 5, bei der die Differenz, die den vorbestimmten ersten Bereich von Werten und den vorbestimmten zweiten Bereich von Werten trennt, gleich zwei ist.

**7.** Vorrichtung nach einem der vorhergehenden Ansprüche, bei der die Zähleinheit ausgebildet ist, um einen Betrug zu signalisieren, wenn eine der folgenden Bedingungen verifiziert wird:

- die Summe der Anzahlen von Schwingungen, die größer als die Referenzspannung sind, für einen selben Zählvorgang größer oder gleich einem vorbestimmten zweiten Schwellenwert ist,
- die Anzahl von Schwingungen, die größer als die Referenzspannung sind, für mindestens eine der Spulen kleiner als ein vorbestimmter dritter Schwellenwert oder größer als ein vorbestimmter vierter Schwellenwert ist,
- die Anzahl von Schwingungen, die größer als die Referenzspannung sind, für mindestens zwei Spulen unter den N Spulen für einen selben Zählvorgang größer als ein vorbestimmter fünfter Schwellenwert ist.

**8.** Vorrichtung nach einem der vorhergehenden Ansprüche, bei der die Zählung der Anzahl von Schwingungen, die größer als die Referenzspannung (Vcc/2) sind, nach einer vorbestimmten Zeit beginnt, um Einschwingeffekte zu beseitigen.

**9.** Vorrichtung nach einem der vorhergehenden Ansprüche, bei der das Rad (6) mit einer Umfangszahnung versehen und ein erstes gezahntes Ritzel (8) fest mit dem Drehelement verbunden ist, um die Bewegung des Drehelements auf das Rad zu übertragen.

**10.** Vorrichtung nach Anspruch 9, bei der ein zweites Ritzel (9) mit dem Rad und dem ersten Ritzel in Eingriff steht, um die Drehbewegung des ersten Ritzels auf das Rad zu übertragen.

**11.** Vorrichtung nach Anspruch 10, bei der die Ritzel und das Rad solche Durchmesser haben, dass das Rad eine Drehfrequenz hat, die kleiner als eine Drehfrequenz des ersten Ritzels ist.

**12.** Vorrichtung nach einem der vorhergehenden Ansprüche, umfassend eine Betrugserkennungseinheit, die ausgebildet ist, um eine Form einer Einhüllenden des oszillierenden Spannungssignal zu bestimmen und nach einer Veränderung der Einhüllenden zu suchen.

**13.** Vorrichtung nach Anspruch 7, bei der, wenn die Anzahl von Schwingungen, die größer als die Referenzspannung sind, für alle Spulen (1, 2) für einen selben Zählvorgang größer als der vorbestimmte fünfte Schwellenwert ist, die Zähleinheit ausgebildet ist, um ein vorbestimmtes besonderes Signal auszusenden, um einen Betrug der Art Herausreißen zu signalisieren.

**14.** Mechanischer Zähler, umfassend ein Gehäuse, das ein Drehelement und eine Vorrichtung nach einem der vorhergehenden Ansprüche umfasst.

**15.** Zähler nach Anspruch 14, bei dem das Rad mit einer Umfangszahnung versehen und ein erstes gezahntes Ritzel fest mit dem Drehelement verbunden ist, um die Bewegung des Drehelements auf das Rad zu übertragen, wobei das Rad in Richtung einer Rückseite des Gehäuses angeordnet ist.

**Claims**

**1.** A counter device for counting revolutions of a rotary element about an axis relative to a structure, the device comprising a wheel (6) made of non-metallic material that is constrained to rotate with the rotary element and that is provided locally with at least one eccentric metal mass (7) that leaves a portion of the wheel uncovered, at least two coils (1, 2) that are spaced apart from each other and mounted stationary relative to the structure facing a portion of the path of the metal mass in such a manner that at least all of the coils except for one are always sensitive to said metal mass, the metal mass (7) being arranged to limit coupling between the coils, each of which belongs to an inductive circuit (10.1, 10.2) that is electrically connected to a counter unit arranged to: issue a voltage pulse (Vref1, Vref2) periodically and substantially simultaneously into each inductive circuit at an issuing frequency that is greater than or equal to four times the predetermined maximum frequency of rotation of the wheel; detect an oscillating voltage signal output by each inductive circuit and compare it with a reference voltage (Vcc/2) in order to count the number of oscillations in the signal that are greater than the reference voltage; and increment a revolution counter by one on each occasion, for one of the inductive circuits, that this number of oscillations greater than the reference voltage lies in a first predetermined range of values while, and for each of the other inductive circuits, that this number lies in a second predetermined range of values having no overlap with the first range.

2. A device according to claim 1, wherein the metal mass (7) extends over an angle β (in degrees) equal to:

$$\beta = 360/N + \alpha$$

with N being the number of coils and α being the angle of an angular sector of the wheel in which a projection of the coil onto the wheel is contained.

3. A device according to claim 1 or claim 2, wherein the metal mass (7) is in the form of a portion of an annulus adjacent to the periphery of the wheel (6).

4. A device according to claim 1, wherein, for a number N of coils, the metal mass comprises N portions of areas that are substantially identical and that are spaced apart in pairs by slots (7.4) extending over a major portion of a radius of the wheel, each slot having a width such that it has a negligible effect on the oscillating signal.

5. A device according to claim 1, wherein the counter unit is arranged to perform an operation of adjusting the pulse voltage for each inductive circuit in such a manner that the number of oscillations of the oscillating signal that are greater than the reference voltage and less than the predetermined threshold lies in the second predetermined range of values when in the presence of the metal mass (7) facing the coil, and lies in the first predetermined range of values when in the absence of the metal mass.

6. A device according to claim 5, wherein the gap separating the first predetermined range of values and the second predetermined range of values is equal to two.

7. A device according to any preceding claim, wherein the counter unit is arranged to signal a fraud if any one of the following conditions is true:

- the sum of the number of oscillations greater than the reference voltage in a given counting operation is greater than or equal to a second predetermined threshold;
- the number of oscillations greater than the reference voltage is less than a third predetermined threshold or greater than a fourth predetermined threshold for at least one of the coils; and
- the number of oscillations greater than the reference voltage in a given counting operation is greater than a fifth predetermined threshold for at least two of the N coils.

8. A device according to any preceding claim, wherein counting the number of oscillations greater than the reference voltage (Vcc/2) begins after a predetermined length of time in order to avoid transient effects.

9. A device according to any preceding claim, wherein the wheel (6) is provided with peripheral gear teeth and a first gearwheel (8) is secured to the rotary element in order to transmit the motion of the rotary element to the wheel.

10. A device according to claim 9, wherein a second gearwheel (9) meshes with the wheel and with the first gearwheel in order to transmit the turning motion of the first gearwheel to the wheel.

11. A device according to claim 10, wherein the gearwheels and the wheel are of diameters such that the wheel has a frequency of rotation that is less than the frequency of rotation of the first gearwheel.

12. A device according to any preceding claim, including a unit for detecting fraud that is arranged to determine an envelope shape for the oscillating voltage signal and to search for an alteration of the envelope.

13. A device according to claim 7, wherein, if the number of oscillations greater than the reference voltage in a given counting operation is greater than the fifth predetermined threshold for all of the coils (1, 2), the counter unit is arranged to issue a predetermined particular signal to signal a tear-out type fraud.

14. A mechanical meter including a housing containing a rotary element and a device according to any preceding claim.

15. A meter according to claim 14, wherein the wheel is provided with peripheral gear teeth and a first gearwheel is secured to the rotary element in order to transmit the motion of the rotary element to the wheel, which wheel is arranged towards a rear face of the housing.

Fig. 1

Position 1

Fig. 2

Position 2

Fig. 3

Position 3

Fig. 4

Position 4

Fig. 5

Vref1=Vcc/2+|ε1| ; Vref2=Vcc/2+|ε2|

Fig. 6

Fig. 7

* : En ce qui concerne l'absence du quartier de cercle métallique en dessous de la bobine, les valeurs peuvent valoir 7 ou 8 selon la position de la roue par rapport à la bobine

**Début** — 201

Calibration Vref1 et Vref 2 (usine) pour avoir 5 impulsions en cas de présence du quartier de cercle métallique sous la bobine et 7 ou 8 sinon*

202
NT = 0 (Nombre de ¼ tours roue 6)
CT = 0 (Nombre de tours roue de référence 8)
R=0 (Etat de la machine de comptage)
E1 = E2 = 0 (Moyennes enveloppes)
DI = 0 (Dernière détection correcte d'absence de quartier métallique (nombre d'impulsions = 7 ou 8 ou 9) par bobines 1 ou 2 ?)
M1v = M2v = 0 (Dernier nombre d'impulsions correct (5, 7 ou 8) respectivement pour bobines 1 et 2)
SA1=SA2=0 (=1 si état continu (B1=6 et (B2=7 ou 8)) pour SA1 / (B2=6 et (B1=7 ou 8)) pour SA2)

203 — Attente** 200ms (Fe=5Hz)    204 — ** : Mise en veille pendant 200ms

205
t= tn : Excitation Bobine 1 (DAC=Vref1; Cmd1 passant, charge capacité bobine 1 par mise à la masse 2µs du bas bobine 1 puis reliée au + du comparateur, Cmd2 bloquant, bas bobine 2 à la masse)
t=tn+t0, Mesure Bobine 1 nombre d'impulsions = M1
t=tn+t1, Mesure niveau de tension de l'enveloppe = U1n

t= tn+50µs : Excitation Bobine 2 (DAC=Vref2; Cmd2 passant, charge capacité bobine 2 par mise à la masse 2µs du bas bobine 2 puis reliée au + du comparateur, Cmd1 bloquant, bas bobine 1 à la masse)
t=tn+50µs+t0, Mesure Bobine 2 nombre d'impulsions = M2
t=tn+50µs+t1, Mesure niveau de tension de l'enveloppe = U2n

206
Calcul de E1 (moyenne des N derniers U1n)
Calcul de E2 (moyenne des N derniers U2n)

210 — Auto-calibration (Incrémentation de NT et calcul de CT simultanément)

207
16 ≤ M1+M2
OU M1<4 OU M1>9
OU M2<4 OU M2>9
OU (M1=4 et M2=9) OU (M1=9 et M2=4)
OU ((M1>6) et (M2>6))
OU E1 < E_Seuil OU
E2 < E_Seuil ?

208 — OUI — Envoi Message Fraude et ajout de l'indication d'arrachement si (M1>6) et (M2>6)

NON

209 — M1=4 OU M1=6 OU M1=9 OU M2=4 OU M2=6 OU M2=9 ?    OUI

NON

220 — M1=5 OU M1=7 OU M1=8 ?    NON

222 — M2=5 OU M2=7 OU M2=8 ?    NON    OUI

OUI — 221
M1v=M1
Si M2v=0 : Si M1v=5 alors M2v=7 sinon M2v=5

223
M2v=M2
Si M1v=0 : Si M2v=5 alors M1v=7 sinon M1v=5

224 — SI (M1=6 et (M2=7 ou M2=8)) alors SA1=1 Sinon SA1=0

225 — SI (M2=6 et (M1=7 ou M1=8)) alors SA2=1 Sinon SA2=0

**AUTOMATE A ETATS**

211 — (R=0 ou R=2) et 7≤M1≤9 ?    NON

214 — R=1 et 7≤M2≤9 ?    NON    OUI

215 — R=2 DI=2    212 — R=1 DI=1

216 — (R=0 ou R=4) et 7≤M2≤9 ?    OUI    217 — R=3 DI=2

NON

218 — R=3 et 7≤M1≤9 ?    NON

OUI

213 — NT=NT+1 CT=NT    219 — R=4 DI=1

Fig. 8

Fig. 9

Fig. 10

Fig. 11

## RÉFÉRENCES CITÉES DANS LA DESCRIPTION

**Documents brevets cités dans la description**

- EP 0467753 A1